# EUROPEAN PATENT APPLICATION

(11) **EP 2 566 224 A1**
(43) Date of publication of application: **06.03.2013**
(21) Application number: 11774989.5
(22) Date of filing: 26.04.2011
(51) Int. Cl.: H04W 24/08

(54) **MOBILE TERMINAL APPARATUS, BASE STATION APPARATUS, EXCHANGE STATION APPARATUS, AND MOBILE COMMUNICATION METHOD**

(30) Priority: 30.04.2010 JP 2010105995
(71) Applicant: NTT DoCoMo, Inc., Tokyo 100-6150 (JP)
(72) Inventor: HAPSARI, Wuri Andarmawanti, Tokyo 100-6150 (JP); UMESH, Anil, Tokyo 100-6150 (JP); IWAMURA, Mikio, Tokyo 100-6150 (JP); TAKAHASHI, Hideaki, Tokyo 100-6150 (JP)
(74) Representative: HOFFMANN EITLE
(86) International application number: PCT/JP2011/060141
(87) International publication number: WO 2011/136208

(57) **Abstract**

A mobile terminal apparatus for acquiring positional information includes a determination unit configured to determine in acquisition of the positional information whether a measurement condition for measurement of radio quality measurement and

investigation of a network is set to the mobile terminal apparatus, a measurement control unit configured to, if the determination unit determines that the measurement condition is set, control to perform the measurement of the radio quality measurement and investigation of the network, a report information generation unit configured to generate report information including a measurement result of the radio quality measurement and investigation of the network and the positional information, and a transmitting unit configured to transmit the report information generated by the report information generation unit to the network.

## Description

### TECHNICAL FIELD

The present invention relates to a mobile communication system.

### BACKGROUND ART

Specification of LTE (Long Term Evolution) is drafted in a standardization group 3GPP (3^{rd} Generation Partnership Project) of W-CDMA (Wideband-Code Division Multiple Access). The LTE is a standard further developed from an enhancement technique HSPA (High Speed Packet Access) of the W-CDMA. In the LTE, high-speed communication of higher than 100 Mbps in downlink and higher than 50 Mbps in uplink is realized to improve latency and frequency utilization efficiency.

When the LTE is introduced in future, it is envisaged that an existing mobile communication system and the LTE may coexist. Such an existing system may include a W-CDMA based mobile communication system.

In a mobile communication system, a "Drive-Test" is carried out to improve network quality. In the Drive-Test, an operator investigates the network quality through measurement of field intensity in areas (electrical wave measurement). For example, the operator visits all the areas periodically to measure the field intensity in the individual areas. Then, the operator finds which of the areas is problematic based on measurement results of the field intensity. The operator improves the network quality based on the measurement results of the field intensity in the problematic areas. See 3GPP TR 36.805 v9.0.0 (Dec. 2009), for example.

### SUMMARY OF INVENTION

### [PROBLEM TO BE SOLVED BY THE INVENTION]

In order to perform the Drive-Test, the operator must visit the areas. For this reason, it takes time to measure the radio quality in the network. Also, there is a problem of higher cost.

In order to improve the above problems, Minimization of Drive-Test (referred to as "MDT" hereinafter) is discussed in the 3GPP.

In the MDT, mobile terminal apparatuses are used to measure the radio quality in a network for measurement and investigation of network quality. Measurement results are reported to the network.

It is expected that introduction of the MDT can shorten measurement time of the network radio quality and reduce the cost.

However, specific methods of the MDT have not often been defined.

The present invention addresses the above-stated problems, and one object of the present invention is to provide a mobile terminal apparatus, a base station apparatus, a switching station apparatus and a mobile communication method that can obtain accurate positional information together with measurement reports by causing target mobile terminal apparatuses to measure desired radio quality.

### [MEANS FOR SOLVING THE PROBLEM]

One aspect of the present invention relates to a mobile terminal apparatus for acquiring positional information, including a determination unit configured to determine in acquisition of the positional information whether a measurement condition and a report condition for measurement of radio quality measurement and investigation of a network are set to the mobile terminal apparatus, a measurement control unit configured to, if the determination unit determines that the measurement condition and the report method are set, control to perform the measurement of the radio quality measurement and investigation of the network, a report information generation unit configured to generate report information including a measurement result of the radio quality measurement and investigation of the network and the positional information, and a transmitting unit configured to transmit the report information generated by the report information generation unit to the network.

One aspect of the present invention relates to a base station apparatus for use in a mobile communication method for causing a target mobile terminal apparatus to measure and report desired radio quality, including an activation signal reception unit configured to receive an activation signal to be transmitted by a positional information pertaining node for providing a positional information service, the activation signal indicating that a positioning procedure has been activated, a measurement initiation signal reception unit configured to receive a signal from a switching station apparatus to cause measurement of radio quality measurement and investigation of a network to be initiated, and a transmitting unit configured to, if the activation signal reception unit receives the activation signal and if the measurement initiation signal reception unit receives the signal to cause the measurement to be initiated, transmit a signal to indicate the target mobile terminal apparatus to measure and report the desired radio quality based on a measurement and report method of the desired radio quality.

One aspect of the present invention relates to a switching station apparatus for use in a mobile communication method for causing a target mobile terminal apparatus to measure and report desired radio quality, including an activation detection unit configured to detect that a positioning procedure has been activated, and a measurement initiation signal transmitting unit configured to, if the activation detection unit detects that the positioning procedure has been activated, transmit a measurement initiation signal to a base station apparatus, the measurement initiation signal causing the target mobile terminal apparatus to initiate measurement of radio quality measurement and investigation of a network, wherein the base station apparatus transmits the measurement initiation signal to the target mobile terminal apparatus to cause the target mobile terminal apparatus to measure and report the desired radio quality based on a measurement and report method of the desired radio quality, and the target mobile terminal apparatus performs the measurement of the radio quality measurement and investigation of the network in accordance with the measurement initiation signal.

One aspect of the present invention relates to a mobile communication method in a mobile terminal apparatus for acquiring positional information, including the steps of determining in acquisition of the positional information whether a measurement condition and a report method for measurement of radio quality measurement and investigation of a network are set to the mobile terminal apparatus, if the step of determining determines that the measurement condition and the report method are set, controlling to perform the measurement of the radio quality measurement and investigation of the network, generating report information including a measurement result of the radio quality measurement and investigation of the network and the positional information, and transmitting the report information generated by the step of generating to the network.

One aspect of the present invention relates to a mobile communication method for causing a target mobile terminal apparatus to measure and report desired radio quality, including steps of a base station apparatus receiving an activation signal to be transmitted by a positional information pertaining node for providing a positional information service, the activation signal indicating that a positioning procedure has been activated, the base station apparatus receiving a measurement initiation signal for measurement of radio quality measurement and investigation of a network from a switching station apparatus, and the base station apparatus, if the activation signal is received at the step of receiving the activation signal and if the measurement initiation signal is received at the step of receiving the measurement initiation signal, transmitting a signal to indicate the target mobile terminal apparatus to measure and report the desired radio quality based on a measurement and report method of the desired radio quality.

One aspect of the present invention relates to a mobile communication method for causing a target mobile terminal apparatus to measure and report desired radio quality, including the steps of a switching station apparatus detecting that a positioning procedure has been activated, the switching station apparatus, if it is detected at the step of detecting that the positioning procedure has been activated, transmitting a measurement initiation signal to a base station apparatus, the measurement initiation signal causing the target mobile terminal apparatus to initiate measurement of radio quality measurement and investigation of a network, the base station apparatus transmitting the measurement initiation signal to the target mobile terminal apparatus to cause the target mobile terminal apparatus to measure and report the desired radio quality based on a measurement and report method of the desired radio quality, and the target mobile terminal apparatus performing the measurement of the radio quality measurement and investigation of the network in accordance with the measurement initiation signal.

### [ADVANTAGE OF THE INVENTION]

According to the mobile terminal apparatus, the base station apparatus, the switching station apparatus and the mobile communication method as disclosed, it is possible to obtain accurate positional information together with measurement reports by causing target mobile terminal apparatuses to measure desired radio quality.

### BRIEF DESCRIPTION OF DRAWINGS

FIG. 1 is a schematic diagram illustrating an exemplary mobile communication system according to this embodiment;
FIG. 2 is a configuration diagram illustrating exemplary hardware items of a mobile terminal apparatus according to this embodiment;
FIG. 3 is a functional block diagram illustrating a mobile terminal apparatus according to this embodiment;
FIG. 4 is a flowchart illustrating an exemplary operation of a mobile terminal apparatus according to this embodiment;
FIG. 5 is a configuration diagram illustrating hardware items of a switching station apparatus according to this embodiment;
FIG. 6 is a functional block diagram illustrating a switching station apparatus according to this embodiment;
FIG. 7 is a sequence chart illustrating an exemplary operation of a mobile communication system including a switching station apparatus according to this embodiment;
FIG. 8 is a configuration diagram illustrating exemplary hardware items of a base station apparatus according to this embodiment;
FIG. 9 is a functional block diagram illustrating a base station apparatus according to this embodiment; and
FIG. 10 is a sequence chart illustrating an exemplary operation of a mobile communication system including a base station apparatus according to this embodiment.

### EMBODIMENTS FOR CARRYING OUT THE INVENTION

Embodiments for carrying our the present invention are described based on embodiment as set forth with reference to the drawings. Throughout all the drawings for describing the embodiments, the same symbols are used for elements having the same function, and descriptions thereof are not repeated.

### FIRST EMBODIMENT

### [System]

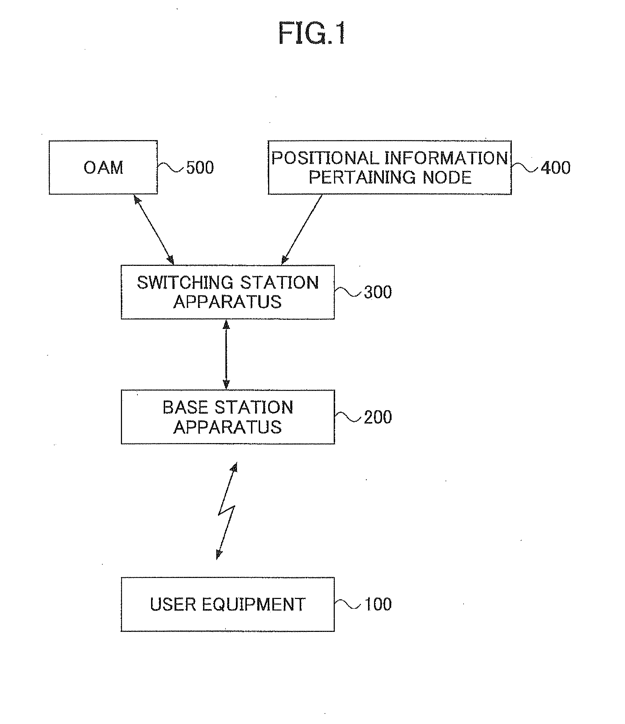

FIG. 1 illustrates an exemplary system to which a mobile terminal apparatus 100 according to this embodiment is applied.

An environment to which the mobile terminal apparatus 100 is applied may be an environment to which a W-CDMA based mobile communication system is applied or an environment to which an Evolved UTRA and UTRAN based mobile communication system is applied. Also, the environment to which the mobile terminal apparatus 100 is applied may be an environment to which both the systems are applied. The Evolved UTRA and UTRAN based mobile communication system is also referred to as a LTE (Long Term Evolution) system.

In FIG. 1, as one example, the Evolved UTRA and UTRAN based mobile communication system is illustrated.

The mobile communication system includes a mobile terminal apparatus (UE: User Equipment) 100, a base station apparatus (eNB: eNodeB) 200 and a switching station apparatus 300. The switching station apparatus 300 is also referred to as a MME (Mobility Management Entity).

The base station apparatus 200 is connected to the switching station apparatus 300, which is in turn connected to a core network (not illustrated). The core network is connected to an operation and maintenance (OAM) node 500. Also, the core network is connected to a positional information pertaining node 400. The positional information pertaining node 400 may include a gateway mobile location center (GMLC), for example. The mobile terminal apparatus 100 wirelessly communicates with the base station apparatus 200 in a cell covered by the base station apparatus 200 in the Evolved UTRA and UTRAN scheme.

Although the single mobile terminal apparatus 100 is illustrated in FIG. 1, two or more mobile terminal apparatuses 100 may be provided. Also, although the single base station apparatus 200 is connected to the switching station apparatus 300 in FIG. 1, two or more base station apparatuses 200 may be connected to the switching station apparatus 300. Also, although the single switching station apparatus 300 is illustrated in FIG. 1, two or more switching station apparatuses 300 may be provided.

The mobile terminal apparatus 100 capable of wirelessly communicating with the base station apparatus 200 can also wirelessly communicate with a base station apparatus (not illustrated) that conducts radio communication in accordance with the W-CDMA scheme. In other words, the mobile terminal apparatus 100 may be a dual-mode terminal. The dual-mode terminal can communicate with not only an existing mobile communication system such as the W-CDMA based system but also a newly introduced mobile communication system such as the LTE based system. The mobile terminal apparatus 100 may be a mobile terminal apparatus capable of wirelessly communicating with the existing mobile communication system, a mobile terminal apparatus capable of wirelessly communicating with the newly introduced mobile communication system and a mobile terminal apparatus capable of wirelessly communicating with both the existing mobile communication system and the newly introduced mobile communication system.

### [Mobile terminal apparatus]

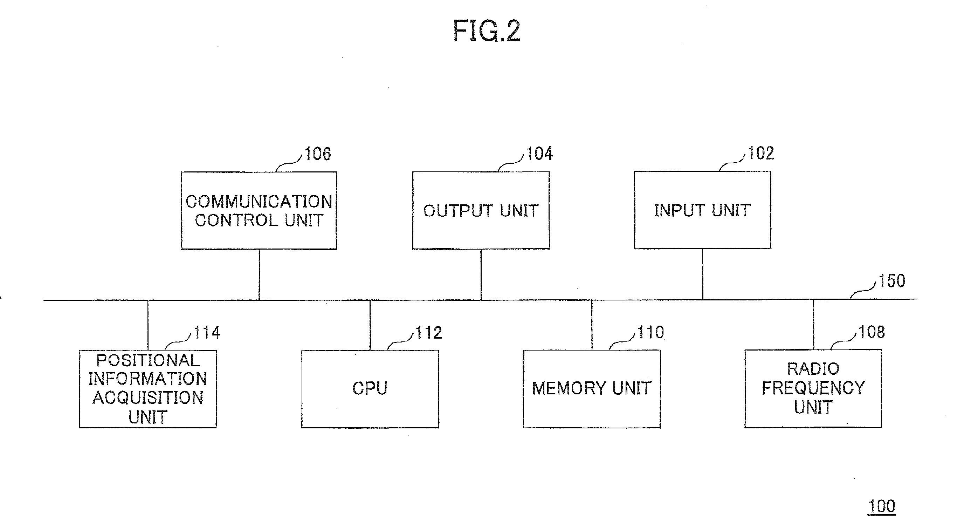

FIG. 2 illustrates the mobile terminal apparatus 100 according to this embodiment. In FIG. 2, a hardware configuration is mainly illustrated.

The mobile terminal apparatus 100 includes an input unit 102, an output unit 104, a communication control unit 106, a radio frequency unit 108, a memory unit 110, a CPU (Central Processing Unit) 112 and a positional information acquisition unit 114. The functional blocks are connected to each other via a bus 150. In this embodiment, the mobile terminal apparatus 100 is described as one example. However, the present invention is not limited to the mobile terminal apparatus 100 and can be applied to any terminal apparatus to which MDT measurement can be applied. For example, the present invention can be applied to a PDA (Personal Digital Assistant).

The CPU 112 controls the input unit 102, the output unit 104, the communication control unit 106, the radio frequency unit 108, the memory unit 110 and the positional information acquisition unit 114. The CPU 112 operates in accordance with programs stored in the memory unit 110 to perform predefined operations.

The memory unit 110 includes an application and an operating system (OS). The application is a software item having some functions to implement user's tasks running on the mobile terminal apparatus 100. The operating system is a software item for providing application software with some abstract interfaces of hardware in the mobile terminal apparatus 100.

The input unit 102 is composed of a keyboard or a mouse, for example, and is a device for inputting instructions and data to the mobile terminal apparatus 100. Also, the input unit 102 is composed of a microphone, for example, and may receive incoming user' s sounds. The sounds may include instructions to the mobile terminal apparatus 100. The instructions include ones directed to the operating system and the application.

The output unit 104 is composed of a display, for example, and displays processing status and processing results of the mobile terminal apparatus 100. Also, the output unit 104 is composed of a speaker, for example, and may make sounds to the user. The processing status and the processing results include ones relating to operations of the operating system and the application. The display includes a LCD (Liquid Crystal Display), a CRT (Cathode Ray Tube) display, a PDP (Plasma Display Panel) display, an organic EL (Electro-Luminescence) display and so on.

The communication control unit 106 generates control information for connecting the mobile terminal apparatus 100 to a target network and analyzes control information transmitted from the connected base station apparatus 200. Also, the communication control unit 106 performs radio quality measurement and investigation (referred to as "MDT measurement" hereinafter) for the network. In the MDT measurement, a RSRP (Reference Signal Received Power) or a RSRQ (Reference Signal Received Quality) may be measured. For example, the MDT measurement may be performed based on an incoming signal from the radio frequency unit 108.

The radio frequency unit 108 conducts radio communication with the base station apparatus 200 in accordance with a predefined radio communication scheme under control of the CPU 112. The radio communication scheme includes the E-UTRA (Evolved Universal Terrestrial Radio Access)/E-UTRAN (Evolved Universal Terrestrial Radio Access Network). For example, the radio frequency unit 108 converts the control information generated by the communication control unit 106 into radio signals and transmits the radio signals. Also, the radio frequency unit 108 converts radio signals from the base station apparatus 200 into baseband signals.

The positional information acquisition unit 114 acquires positional information on the mobile terminal apparatus 100. For example, the positional information acquisition unit 114 acquires the positional information by activating a positional information acquisition procedure. Also, for example, the positional information acquisition unit 114 may include a GPS receiver. The GPS receiver measures the position of the mobile terminal apparatus 100 based on positioning signals transmitted from GPS satellites. The positional information may be represented by coordinates of latitude and longitude. Also, the positional information may be further represented by height. Currently, about 30 GPS satellites go around the earth at an altitude of about 20, 000 km, and there are six orbit planes around the earth, which are each slanted by 55 degree. Greater than or equal to four GPS satellites are deployed evenly on each of the orbital planes. Accordingly, when the sky opens, greater than or equal to five GPS satellites can always be observed at any location on the earth. Also, the positional information acquisition unit 114 may acquire the positional information by using other positional information acquisition means instead of the GPS. For example, the positional information acquisition unit 114 may acquire the positional information based on electrical waves arriving from access points of a wireless LAN.

### [Types of MDT]

Two types of MDT, "Immediate MDT" and "Logged MDT", are defined.

The "Immediate MDT" includes MDT measurement, which is performed when the mobile terminal apparatus 100 is in an RRC_CONNECTED state, and reporting of a measurement result. Normally, the mobile terminal apparatus 100 performs CONNECTED Measurement and Reporting in the RRC_CONNECTED state. In the "Immediate MDT", the mobile terminal apparatus 100 performs operations similar to the CONNECTED Measurement and Reporting. For example, in response to occurrence of a predefined event or expiration of a period, the mobile terminal apparatus 100 reports the measurement result. The event includes the field intensity from a serving cell falling below a threshold.

The "Logged MDT" includes MDT measurement, which is performed when the mobile terminal apparatus 100 is in an RRC_IDLE state, and recording of a measurement result. A measurement condition and a reporting method for the MDT measurement (referred to as "MDT measurement configuration" hereinafter) are preset to the mobile terminal apparatus 100. For example, in the RRC_CONNECTED state, the MDT measurement configuration is set to the mobile terminal apparatus 100. The MDT measurement configuration may be applied to the case where the mobile terminal apparatus 100 is in the RRC_IDLE. When the mobile terminal apparatus 100 transitions to the RRC_IDLE state, the mobile terminal apparatus 100 performs the MDT measurement and records the measurement result in accordance with the preset MDT measurement configuration. Also, when the mobile terminal apparatus 100 is in the RCC_CONNECTED state, the mobile terminal apparatus 100 may perform the MDT measurement and record the measurement result. Then, the mobile terminal apparatus 100 reports the recorded measurement result in an RRC_CONNECTED session.

The "Immediate MDT" may be differentiated from the "Logged MDT" in that in response to occurrence of an event, the measurement result is either reported or recorded.

### [Function of mobile terminal apparatus]

The MDT measurement result is reported to investigate the radio quality of a network and improve an area of a poor radio quality. Thus, it is difficult to use only the information on the radio quality of the network to achieve the improvement, and positional information regarding a position where the radio quality has been obtained is needed.

Particularly in the "Logged MDT", measurement results of the radio quality measured at various positions in the network are recorded, and accordingly it is preferred that the measurement results including the associated positional information are reported.

In the "Logged MDT", there are many cases where the mobile terminal apparatus 100 records the measurement results in the RRC_IDLE state, and accordingly the network may not be able to grasp the positional information.

To this end, in the mobile terminal apparatus 100, a measurement result of the radio quality in a network and available positional information possessed by the mobile terminal apparatus 100 are recorded.

Operations running in the mobile terminal apparatus 100 include an operation where in response to activation of the positional information acquisition unit 114 in the mobile terminal apparatus 100, it is determined whether the MDT measurement configuration is set. The operations running in the mobile terminal apparatus 100 include an operation where if it is determined that the MDT measurement configuration is set, the MDT measurement is performed. The operations running in the mobile terminal apparatus 100 include an operation to report the measurement result and the positional information (location info) of the mobile terminal apparatus 100. The positional information is preferably available positional information possessed by the mobile terminal apparatus 100. The available positional information includes the latest positional information possessed by the mobile terminal apparatus 100. For example, a procedure to acquire the latest positional information is not activated in reporting the measurement result, and the positional information stored in the mobile terminal apparatus 100 at the timing of reporting the measurement result may be used. Also, if needed, the positional information acquisition procedure is activated in reporting the measurement result, and the positional information acquired in the procedure may be used.

Also, the positional information may include related information on the positional information. For example, in the case where a standalone GPS is activated, in addition to the measurement result obtained based on the GPS, the RSRP and/or the RSRQ for adjacent cells may be included.

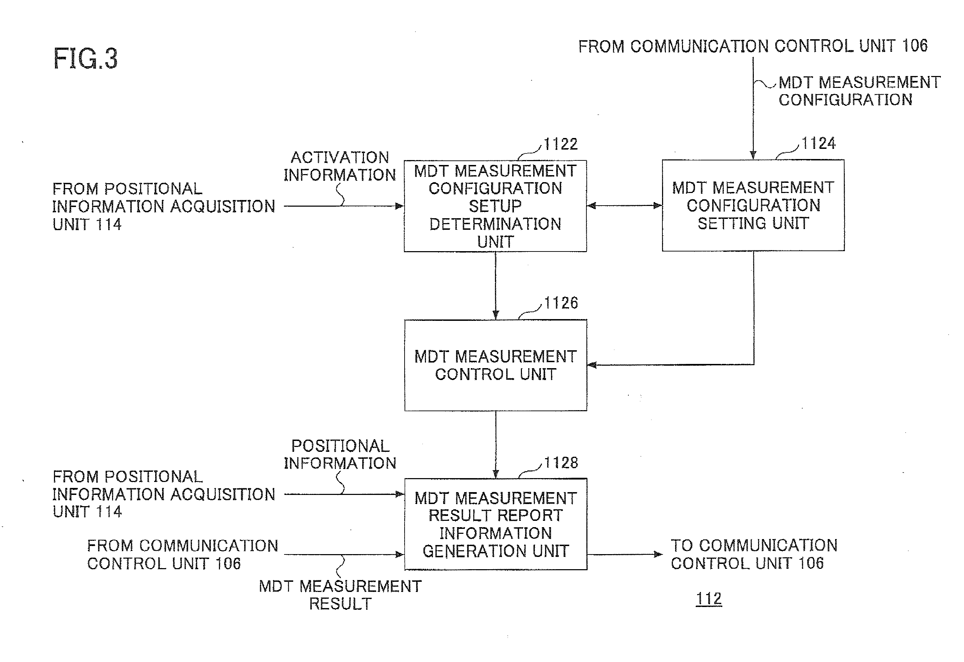

FIG. 3 illustrates functions of the mobile terminal apparatus 100. In FIG. 3, functions executed by the CPU 112 are mainly illustrated.

The mobile terminal apparatus 100 includes a MDT measurement configuration setup determination unit 1122. When the positional information acquisition unit 114 is activated, activation information indicative of the activation of the positional information acquisition unit 114 is supplied from the positional information acquisition unit 114 to the MDT measurement configuration setup determination unit 1122. For example, in the case where a GPS receiver is activated in response to an incoming command from a positional information service to the positional information acquisition unit 114 including the GPS receiver, the positional information acquisition unit 114 supplies the activation information to the MDT measurement configuration setup determination unit 1122. In response to the incoming activation information from the positional information acquisition unit 114, the MDT measurement configuration setup determination unit 1122 inquires from a MDT measurement configuration setting unit 1124 whether the MDT measurement configuration is set to the MDT measurement configuration setting unit 1124. If the MDT measurement configuration is set to the MDT measurement configuration setting unit 1124, the MDT measurement configuration setup determination unit 1122 indicates a MDT measurement control unit 1126 to start the MDT measurement. If the MDT measurement configuration is not set to the MDT measurement configuration setting unit 1124, the MDT measurement configuration setup determination unit 1122 waits.

The mobile terminal apparatus 100 includes the MDT measurement configuration setting unit 1124. The MDT measurement configuration setting unit 1124 is connected to the MDT measurement configuration setup determination unit 1122. The MDT measurement configuration setting unit 1124 receives the incoming MDT measurement configuration from the communication control unit 106. The MDT measurement configuration includes a measurement parameter or item for measuring the radio quality and obtaining a measurement result to be reported in accordance with the MDT measurement. The MDT measurement configuration setting unit 1124 sets the incoming MDT measurement configuration from the communication control unit 106. Also, the MDT measurement configuration setting unit 1124 supplies a setup result of the MDT measurement configuration to the MDT measurement control unit 1126. Also, the MDT measurement configuration setting unit 1124 responds to an inquiry from the MDT measurement configuration setup determination unit 1122 as to whether the MDT measurement configuration has been set.

The mobile terminal apparatus 100 includes the MDT measurement control unit 1126. The MDT measurement control unit 1126 is connected to the MDT measurement configuration setup determination unit 1122 and the MDT measurement configuration setting unit 1124. Upon receiving a command to start the MDT measurement from the MDT measurement configuration setup determination unit 1122, the MDT measurement control unit 1126 controls the MDT measurement in accordance with the incoming MDT measurement configuration from the MDT measurement configuration setting unit 1124. The MDT measurement control unit 1126 instructs a MDT measurement result report information generation unit 1128 to generate report information for reporting to the network.

The mobile terminal apparatus 100 includes the MDT measurement result report information generation unit 1128. The MDT measurement result report information generation unit 1128 is connected to the MDT measurement control unit 1126. The MDT measurement result report information generation unit 1128 receives incoming positional information from the positional information acquisition unit 114 and the MDT measurement result from the communication control unit 106. Upon receiving a command to generate report information to be reported to the network from the MDT measurement control unit 1126, the MDT measurement result report information generation unit 1128 generates report information including the MDT positioning result and the positional information in accordance with the command. The MDT measurement result report information generation unit 1128 supplies the report information to the communication control unit 106.

### [Operation of mobile terminal apparatus]

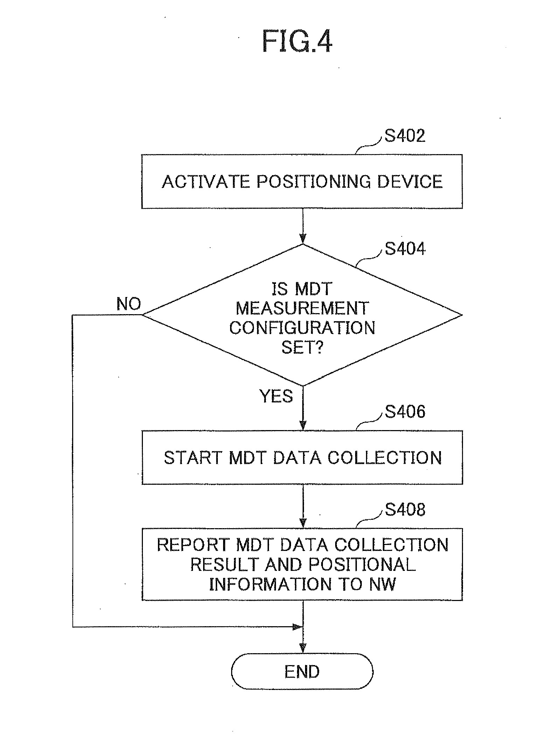

FIG. 4 is a flowchart illustrating an exemplary operation of the mobile terminal apparatus 100.

A positioning device in the mobile terminal apparatus 100 is activated (step S402). The positioning device may be a standalone GPS, for example. For example, the positional information acquisition unit 114 determines whether the positioning device in the mobile terminal apparatus 100 has been activated, and if it is determined that the positioning device has been activated, supplies activation information to the MDT measurement configuration setup determination unit 1122.

The mobile terminal apparatus 100 determines whether the MDT measurement configuration is set (step S404). For example, the MDT measurement configuration setup determination unit 1122 determines whether the MDT measurement configuration is set by inquiring the MDT measurement configuration setting unit 1124 whether the MDT measurement configuration has been set.

If the MDT measurement configuration is set (step S404:YES), the mobile terminal apparatus 100 initiates the MDT measurement and starts to collect MDT data (step S406). For example, if the MDT measurement configuration is set, the MDT measurement configuration setup determination unit 1122 instructs the MDT measurement control unit 1126 to initiate the MDT measurement. The MDT measurement control unit 1126 controls the MDT measurement in accordance with the incoming command to initiate the MDT measurement from the MDT measurement configuration setup determination unit 1122.

The mobile terminal apparatus 100 reports a MDT data collection result and the positioning information to the network. For example, the MDT measurement control unit 1126 instructs the MDT measurement result repot information generation unit 1128 to generate report information to be reported to the network. Upon receiving a command to generate positioning result information to be reported to the network from the MDT measurement control unit 1126, the MDT measurement result report information generation unit 1128 generates the report information including the MDT measurement result and the positional information in accordance with the command. The MDT measurement result report information generation unit 1128 supplies the report information to the communication control unit 106. The communication control unit 106 causes the radio frequency unit 108 to transmit the report information wirelessly.

If the MDT measurement configuration is not set at step S404, the MDT measurement is impossible, and the operation ends.

In the flowchart illustrated in FIG. 4, the report information generated at step S408 may be recorded. For example, the MDT measurement control unit 1126 instructs the MDT measurement result report information generation unit 1128 to store the report information in the memory unit 110. After that, the report information stored in the memory unit 110 may be wirelessly transmitted to the network.

According to this embodiment, the report information can be generated in association of the MDT measurement result with the latest positional information possessed by the mobile terminal apparatus 100. Measurement of the positional information is not performed for the MDT measurement, and when the positional information is acquired, the MDT measurement is performed, which can reduce processing load associated with the MDT measurement.

### SECOND EMBODIMENT

### [System]

An environment to which the switching station apparatus 300 according to this embodiment is applied is the same as the environment described with reference to FIG. 1.

### [Switching station apparatus]

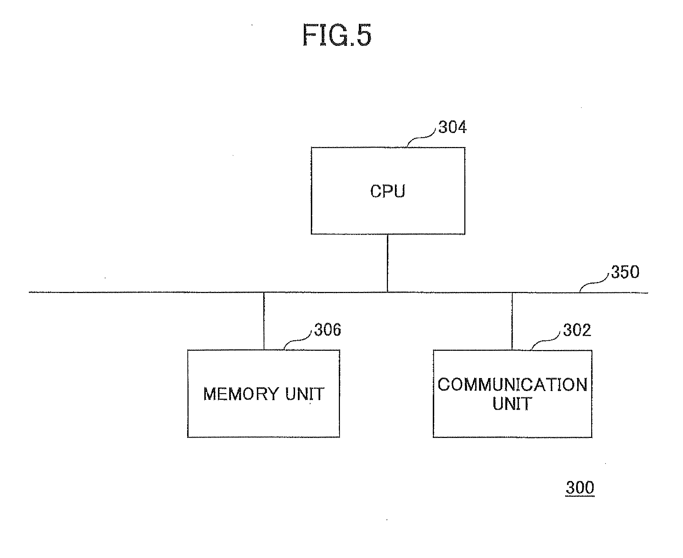

FIG. 5 illustrates the switching station apparatus 300 according to this embodiment. In FIG. 5, a hardware configuration is mainly illustrated.

The switching station apparatus 300 includes a communication unit 302, a CPU 304 and a memory unit 306. The functional blocks are connected to each other via a bus 350.

The CPU 304 controls the communication unit 302 and the memory unit 306. The CPU 304 operates in accordance with programs stored in the memory unit 306 and performs predefined operations.

The memory unit 306 includes an application and an operating system. The application is a software item having functions to implement user's tasks in the switching station apparatus 300. The operating system is a software item for providing application software with some abstract interfaces of hardware.

The communication unit 302 communicates with the base station apparatus 200 in accordance with a predefined communication scheme under control of the CPU 304. Also, the communication unit 302 communicates with an OAM node 500 in accordance with a predefined communication scheme. Also, the communication unit 302 communicates with the positional information pertaining node 400 in accordance with a predefined communication scheme.

### [Function of switching station apparatus]

The switching station apparatus 300 can detect whether the mobile terminal apparatus 100 is either in the RRC_IDLE state or the RRC_CONNECTED state. Also, when the positional information pertaining node 400 activates the positional information measurement procedure, a positional information measurement indication is transmitted to the switching station apparatus 300. Upon receiving the positional information positioning indication, the switching station apparatus 300 instructs the base station apparatus 200 to start to collect MDT data. This instruction is used to cause a target mobile terminal apparatus to measure and report desired radio quality.

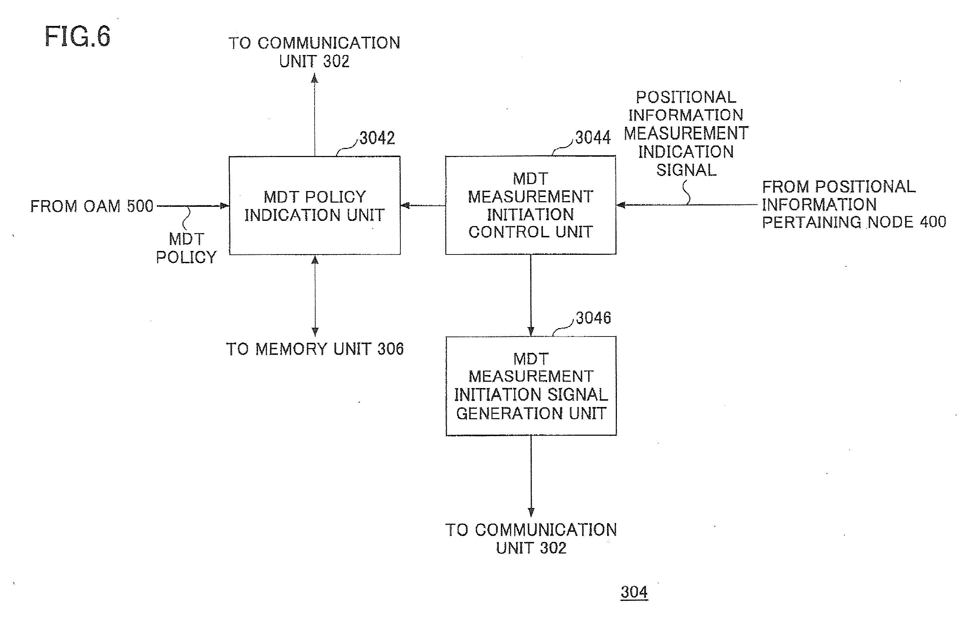

FIG. 6 illustrates functions of the switching station apparatus 300. In FIG. 6, functions executed by the CPU 304 are mainly illustrated.

The switching station apparatus 300 includes a MDT policy indication unit 3042. The MDT policy indication unit 3042 receives an incoming MDT policy. The MDT policy includes information indicative of an area where the MDT measurement is performed, such as a cell ID. Also, the MDT policy may include subscriber information of the mobile terminal apparatus 100. Also, the MDT policy may include capability information of the mobile terminal apparatus 100. Also, the MDT policy may include information indicative of a mobile terminal apparatus having a certain subscriber identifier (IMSI: International Mobile Subscriber Indentity). The MDT policy may be received from the OAM node 500, for example. The OAM node 500 is a node serving for operation and maintenance of a network apparatus. The MDT policy indication unit 3042 temporarily stores the MDT policy in the memory unit 306. Also, the MDT policy indication unit 3042 supplies the MDT policy stored in the memory unit 306 to the communication unit 302. The incoming MDT policy to the communication unit 302 is transmitted to the base station apparatus 200. The MDT policy is converted by the base station apparatus 200 into a format for transmission to the mobile terminal apparatus 100 and is wirelessly transmitted to the mobile terminal apparatus 100 as the MDT measurement configuration. The mobile terminal apparatus 100 sets the MDT measurement configuration.

The switching station apparatus 300 includes a MDT measurement initiation control unit 3044. The MDT measurement initiation control unit 3044 receives an incoming positional information measurement indication signal from the positional information pertaining node 400. The MDT measurement initiation control unit 3044 instructs the MDT policy indication unit 3042 to transmit the MDT policy. Also, upon receiving the incoming positional information measurement indication signal, the MDT measurement initiation control unit 3044 instructs the MDT measurement initiation signal generation unit 3046 to generate a MDT measurement initiation signal.

The switching station apparatus 300 includes a MDT measurement initiation signal generation unit 3046. The MDT measurement initiation signal generation unit 3046 generates a MDT measurement initiation signal in accordance with the command to generate the MDT measurement initiation signal from the MDT measurement initiation control unit 3044. Also, the MDT measurement initiation signal generation unit 3046 supplies the MDT measurement initiation signal to the communication unit 302. The MDT measurement initiation signal is converted by the base station apparatus 200 into a format for transmission to the mobile terminal apparatus 100 and is wirelessly transmitted to the mobile terminal apparatus 100. The mobile terminal apparatus 100 performs the MDT measurement in accordance with the MDT measurement initiation signal.

Also, the positional information is transmitted from the positional information pertaining node 400 to the mobile terminal apparatus 100. The mobile terminal apparatus 100 generates report information including the positional information transmitted from the positional information pertaining node 400 and a MDT measurement result. The report information is transmitted to the switching station apparatus 300. Furthermore, the report information may be transmitted from the switching station apparatus 300 to the OAM node 500.

### [Operation of switching station apparatus]

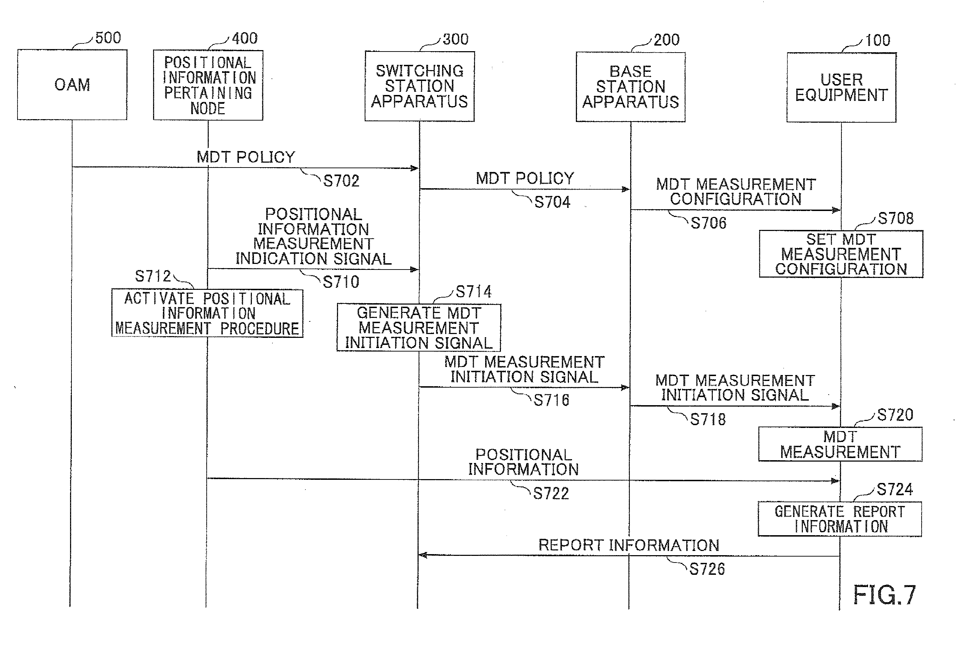

FIG. 7 is a sequence chart illustrating an exemplary operation of the switching station apparatus 300.

A MDT policy is transmitted from the OAM node 500 to the switching station apparatus 300 (step S702) .

The switching station apparatus 300 transmits the incoming MDT policy from the OAM node 500 to the base station apparatus 200 (step S704). For example, the MDT policy indication unit 3042 temporarily stores the MDT policy in the memory unit 306. The MDT policy indication unit 3042 transmits the MDT policy stored in the memory unit 306 to the base station apparatus 200. For example, if the mobile terminal apparatus 100 is in the RRC_IDLE state at reception timing of the MDT policy, the MDT policy is stored in the memory unit 306. After that, when the mobile terminal apparatus 100 transitions to the RRC_CONNECTED state, the MDT policy may be transmitted to the base station apparatus 200. Also, if the mobile terminal apparatus 100 does not have to store the MDT policy in the memory unit 306, the mobile terminal apparatus 100 may transmit the MDT policy to the base station apparatus 200 without storing in the memory unit 306. For example, if the mobile terminal apparatus 100 is in the RRC__CONNECTED state at reception timing of the MDT policy, the mobile terminal apparatus 100 may transmit the MDT policy without storing in the memory unit 306.

The base station apparatus 200 converts the MDT policy transmitted from the switching station apparatus 300 into MDT measurement configuration and transmits the MDT measurement configuration to the mobile terminal apparatus 100 wirelessly (step S706). The mobile terminal apparatus 100 sets the MDT measurement configuration transmitted from the base station apparatus 200 (step S708).

If the positional information pertaining node 400 performs positioning, a positional information measurement indication signal is transmitted from the positional information pertaining node 400 to the switching station apparatus 300 (step S710).

The positional information pertaining node 400 activates a positional information measurement procedure (step S712) .

Upon receiving the positional information measurement indication signal from the positional information pertaining node 400, the switching station apparatus 300 generates a MDT measurement initiation signal (step S714). For example, the positional information measurement indication signal from the positional information pertaining node 400 is supplied to the MDT measurement initiation control unit 3044. Receiving the positional information measurement indication signal, the MDT measurement initiation control unit 3044 instructs the MDT measurement initiation signal generation unit 3046 to generate a MDT measurement initiation signal. The MDT measurement initiation signal generation unit 3046 generates the MDT measurement initiation signal in accordance with the incoming instruction to generate the MDT measurement initiation signal from the MDT measurement initiation signal generation unit 304.

The switching station apparatus 300 transmits the MDT measurement initiation signal to the base station apparatus 200 (step S716).

The base station apparatus 200 wirelessly transmits the MDT measurement initiation signal from the switching station apparatus 300 to the mobile terminal apparatus 100 (step S718). The MDT measurement initiation signal is transmitted based on the MDT measurement configuration.

Upon receiving the MDT measurement initiation signal, the mobile terminal apparatus 100 performs the MDT measurement in accordance with the MDT measurement configuration set at step S708 (step S720).

The positional information on the mobile terminal apparatus 100 is transmitted from the positional information pertaining node 400 to the mobile terminal apparatus 100 (step S722).

The mobile terminal apparatus 100 generates report information including the MDT measurement result at step S720 and the positional information transmitted at step S722 (step S724).

The mobile terminal apparatus 100 transmits the report information generated at step S724 to the switching station apparatus 300 (step S726). Furthermore, the report information may be transmitted from the switching station apparatus 300 to the OAM node 500.

In this embodiment, in response to transmission of the MDT policy from the switching station apparatus 300, the MDT measurement may be initiated. For example, the switching station apparatus 300 may keep the MDT policy until it receives the positional information measurement indication signal from the positional information pertaining node 400. When the switching station apparatus 300 receives the positional information measurement indication signal, the switching station apparatus 300 transmits the MDT policy to the base station apparatus 200. The base station apparatus 200 generates the MDT measurement configuration based on the MDT policy from the switching station apparatus 300 and transmits the MDT measurement configuration to the mobile terminal apparatus 100 wirelessly. The mobile terminal apparatus 100 sets the MDT measurement configuration from the base station apparatus 200 and starts the MDT measurement. In this manner, the MDT measurement is initiated at the base station apparatus 200 in response to reception of the MDT policy, which can reduce the number of signals transmitted for the MDT measurement.

According to this embodiment, when the positional information acquisition procedure has been activated, the mobile terminal apparatus starts the MDT measurement and generates report information including the MDT measurement result and the positional information. Measurement of the positional information is not performed for the MDT measurement, and when the positional information is obtained, the MDT measurement is performed, which can reduce processing load associated with the MDT measurement.

### VARIATION

In the second embodiment, the base station apparatus 200 may associate the positional information of the mobile terminal apparatus 100 with the MDT measurement result of the mobile terminal apparatus 100.

### [Base station apparatus]

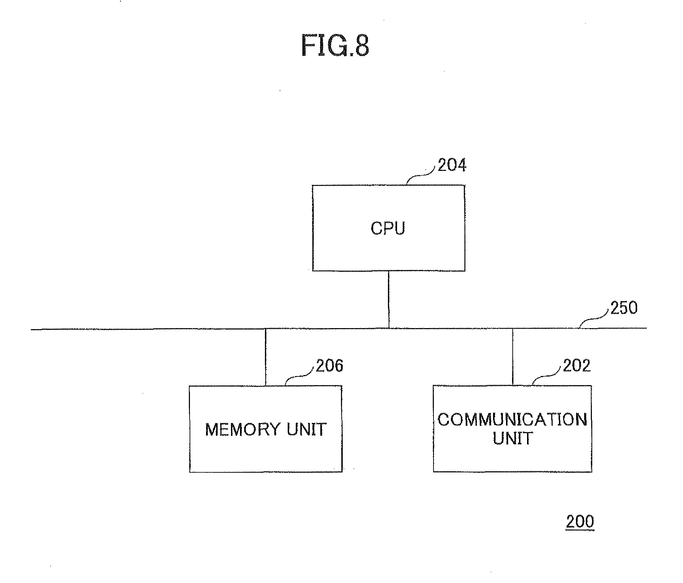

FIG. 8 illustrates the base station apparatus 200 according to this variation. In FIG. 8, a hardware configuration is mainly illustrated.

The base station apparatus 200 includes a communication unit 202, a CPU 204 and a memory unit 206. The functional blocks are connected to each other via a bus 250.

The CPU 204 controls the communication unit 202 and the memory unit 206. The CPU 204 operates in accordance with programs stored in the memory unit 206 and performs predefined operations.

The memory unit 206 includes an application and an operating system. The application is a software item having functions to implement user's tasks on the base station apparatus 200. The operating system is a software item for providing application software with some abstract interfaces of hardware in the base station apparatus 200.

The communication unit 202 communicates with the switching station apparatus 300 under control of the CPU 204 in a wired manner. Also, the communication unit 202 wirelessly communicates with the mobile terminal apparatus 100 in accordance with a predefined radio communication scheme under control of the CPU 204. The radio communication scheme includes the LTE.

### [Function of base station apparatus]

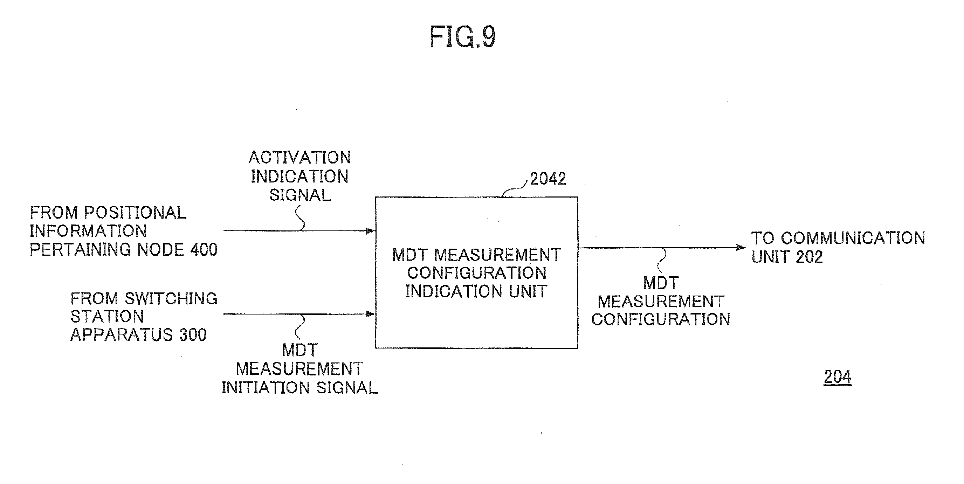

FIG. 9 illustrates functions of the base station apparatus 200. In FIG. 9, functions executed by the CPU 204 are mainly illustrated.

The base station apparatus 200 includes a MDT measurement configuration indication unit 2042. The MDT measurement configuration indication unit 2042 receives an incoming activation indication signal from the positional information pertaining node 400 and an incoming MDT measurement initiation signal from the switching station apparatus 300. When receiving the activation indication signal and the MDT measurement initiation signal, the MDT measurement configuration indication unit 2042 supplies MDT measurement configuration to the communication unit 202. A MDT policy to generate the MDT measurement configuration is transmitted to the base station apparatus 200 beforehand. The communication unit 202 wirelessly transmits the MDT measurement configuration from the MDT measurement configuration indication unit 2042 to the mobile terminal apparatus 100.

### [Operation of base station apparatus]

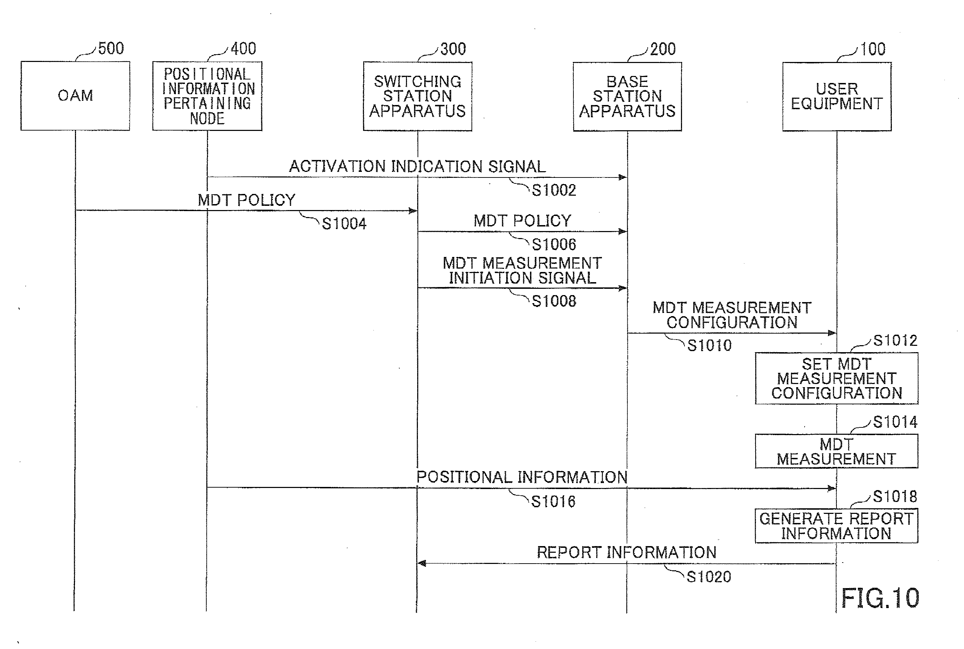

FIG. 10 is a sequence chart illustrating an exemplary operation of the base station apparatus 200.

If the positional information pertaining node 400 activates a positional information measurement procedure, the positional information pertaining node 400 informs the base station apparatus 200 that the positional information measurement procedure has been activated (step S1002). For example, if the positional information pertaining node 400 is an E-SMLC (Evolved-Serving Mobile Location Center), the E-SMLC informs the base station apparatus 200 that the positional information measurement procedure has been activated.

A MDT policy is transmitted from the OAM node 500 to the switching station apparatus 300 (step S1004).

The switching station apparatus 300 transmits the MDT policy from the OAM node 500 to the base station apparatus 200 (step S1006). For example, the MDT policy indication unit 3042 stores the MDT policy in the memory unit 306 temporarily. The MDT policy indication unit 3042 transmits the MDT policy stored in the memory unit 306 to the base station apparatus 200. For example, if the mobile terminal apparatus 100 is in the RRC_IDLE state at reception timing of the MDT policy, the MDT policy is stored in the memory unit 306, and when the mobile terminal apparatus 100 transitions to the RRC_CONNECTED state, the MDT policy may be transmitted to the base station apparatus 200. Also, if the mobile terminal apparatus 100 does not have to store the MDT policy, the mobile terminal apparatus 100 may transmit the MDT policy to the base station apparatus 200 without storing it in the memory unit 306.

Also, upon receiving the MDT policy from the OAM node 500, the switching station apparatus 300 transmits a MDT measurement initiation signal to the base station apparatus 200 (step S1008).

The base station apparatus 200 converts the MDT policy transmitted from the switching station apparatus 300 into MDT measurement configuration and wirelessly transmits the MDT measurement configuration to the mobile terminal apparatus 100 (step S1010). The mobile terminal apparatus 100 sets the MDT measurement configuration transmitted from the base station apparatus 200 (step S1012).

After setting the MDT measurement configuration, the mobile terminal apparatus 100 performs the MDT measurement in accordance with the MDT measurement configuration (step S1014). The base station apparatus 200 may transmit a MDT measurement initiation signal for cause the mobile terminal apparatus 100 to initiate the MDT measurement to the mobile terminal apparatus 100. For example, the MDT measurement initiation signal may be transmitted in accordance with the MDT measurement configuration.

Position information of the mobile terminal apparatus 100 is transmitted from the positional information pertaining node 400 to the mobile terminal apparatus 100 (step S1016).

The mobile terminal apparatus 100 generates report information including the MDT measurement result at step S1014 and the positional information transmitted at step S1016 (step S1018).

The mobile terminal apparatus 100 transmits the report information generated at step S1018 to the switching station apparatus 300 (step S1020). In addition, the report information may be transmitted from the switching station apparatus 300 to the OAM node 500.

In this variation, the positional information from the positional information pertaining node 400 may be transmitted to the base station apparatus 200. In other words, the positional information is not returned to the mobile terminal apparatus 100. For example, it corresponds to the case where a MT-LR (Mobile Terminated-Location Request) procedure is applied. If the positional information is not returned to the mobile terminal apparatus 100, the base station apparatus 200 is responsible for association of the MDT measurement result with the positional information. The associated MDT measurement result and the positional information are transmitted to the switching station apparatus 300. Furthermore, the MDT measurement result and the positional information may be transmitted to the OAM node 500.

According to this variation, if the positional information acquisition procedure is activated, the network indicates the MDT measurement. Per this indication, the mobile terminal apparatus starts the MDT measurement and generates report information including the MDT measurement result and the positional information. Measurement of the positional information is not performed for the MDT measurement, and when the positional information is acquired, the MDT measurement is performed, which can reduce processing load associated with the MDT measurement. Herein, the network includes the base station apparatus.

According to the embodiments, a mobile terminal apparatus for acquiring positional information is provided.

The mobile terminal apparatus for acquiring positional information includes a determination unit configured to determine in acquisition of the positional information whether a measurement condition for measurement in radio quality measurement and investigation in a network is set to the mobile terminal apparatus, a measurement control unit configured to, if the determination unit determines that the measurement condition is set, control to perform the measurement in the radio quality measurement and investigation of the network, a report information generation unit configured to generate report information including a measurement result of the radio quality measurement and investigation of the network and the positional information, and a transmitting unit configured to transmit the report information generated by the report information generation unit to the network.

The report information can b transmitted in association of the MDT measurement result with the latest positional information possessed by the mobile terminal apparatus 100. Measurement of the positional information is not performed for the MDT measurement, and when the positional information is acquired, the MDT measurement is performed, which can reduce processing load associated with the MDT measurement.

The mobile terminal apparatus may further include a memory unit configured to store the report information generated by the report information generation unit, wherein the transmitting unit transmits the report information stored in the memory unit to the network.

Some amount of the report information including the MDT measurement results and the positional information can be reported.

A base station apparatus according to this embodiment is a base station for use in a mobile communication method for causing a target mobile terminal apparatus to measure and report desired radio quality, including an activation signal reception unit configured to receive an activation signal to be transmitted by a positional information pertaining node for providing a positional information service, the activation signal indicating that a positioning procedure has been activated, a measurement initiation signal reception unit configured to receive a signal from a switching station apparatus to cause measurement in radio quality measurement and investigation of a network to be initiated, and a transmitting unit configured to, if the activation signal reception unit receives the activation signal and if the measurement initiation signal reception unit receives the signal to cause the measurement to be initiated, transmit a signal to indicate the target mobile terminal apparatus to measure and report the desired radio quality based on a measurement and report method of the desired radio quality.

If the positional information acquisition procedure has been activated, the network indicates the MDT measurement. The mobile terminal apparatus starts the MDT measurement in accordance with the indication and generates the report information including the MDT measurement result and the positional information. Measurement of the positional information is not performed in the MDT measurement, and when the positional information is acquired, the MDT measurement is performed, which can reduce processing load associated with the MDT measurement.

The base station apparatus further includes a positional information acquisition unit configured to acquire positional information to be transmitted by the positional information pertaining node, a measurement result acquisition unit configured to acquire a measurement result of the radio quality measurement and investigation of the network to be transmitted by the mobile terminal apparatus, a report information generation unit configured to generate report information including positional information acquired by the positional information acquisition unit and a measurement result to be transmitted by the mobile terminal apparatus, the measurement result corresponding to the positional information among measurement results acquired by the measurement result acquisition unit and a report information transmitting unit configured to transmit the report information generated by the report information generation unit to an upper node.

The report information can be generated by the base station apparatus.

A switching station apparatus according to this embodiment includes an activation detection unit configured to detect that a positioning procedure has been activated, and a measurement initiation signal transmitting unit configured to, if the activation detection unit detects that the positioning procedure has been activated, transmit a measurement initiation signal to a base station apparatus, the measurement initiation signal causing the target mobile terminal apparatus to initiate measurement in radio quality measurement and investigation of a network, wherein the base station apparatus transmits the measurement initiation signal to the target mobile terminal apparatus to cause the target mobile terminal apparatus to measure and report the desired radio quality based on a measurement and report method of the desired radio quality, and the target mobile terminal apparatus performs the measurement in the radio quality measurement and investigation of the network in accordance with the measurement initiation signal.

If the positional information acquisition procedure has been activated, the mobile terminal apparatus starts the MDT measurement and generates report information including a measurement result of the MDT and the positional information. Measurement of the positional information is not performed for the MDT measurement, and when the positional information is acquired, the MDT measurement is performed, which can reduce processing load associated with the MDT measurement.

The switching station apparatus further includes a memory unit configured to store a radio quality measurement and investigation policy of the network, and an indication unit configured to transmit the radio quality measurement and investigation policy of the network stored in the memory unit to the target mobile terminal apparatus via the base station apparatus, wherein the base station apparatus converts the radio quality measurement and investigation policy of the network into a measurement condition for measurement in the radio quality measurement and investigation of the network and transmits the measurement condition to the target mobile terminal apparatus.

Configuration for the MDT measurement can be transmitted to the mobile terminal apparatus.

According to a mobile communication method of this embodiment, it is a mobile communication method in a mobile terminal apparatus for acquiring positional information, including determining in acquisition of the positional information whether a measurement condition for measurement in radio quality measurement and investigation in a network is set to the mobile terminal apparatus, if the step of determining determines that the measurement condition is set, controlling to perform the measurement in the radio quality measurement and investigation of the network, generating report information including a measurement result of the radio quality measurement and investigation of the network and the positional information, and transmitting the report information generated by the step of generating to the network.

The mobile communication method according to this embodiment is a mobile communication method for causing a target mobile terminal apparatus to measure and report desired radio quality, including steps of a base station apparatus receiving an activation signal to be transmitted by a positional information pertaining node for providing a positional information service, the activation signal indicating that a positioning procedure has been activated, the base station apparatus receiving a measurement initiation signal for measurement in radio quality measurement and investigation of a network from a switching station apparatus, and the base station apparatus, if the activation signal is received at the step of receiving the activation signal and if the measurement initiation signal is received at the step of receiving the measurement initiation signal, transmitting a signal to indicate the target mobile terminal apparatus to measure and report the desired radio quality based on a measurement and report method of the desired radio quality.

The mobile communication method according to this embodiment is a mobile communication method for causing a target mobile terminal apparatus to measure and report desired radio quality, including the steps of: a switching station apparatus detecting that a positioning procedure has been activated, the switching station apparatus, if it is detected at the step of detecting that the positioning procedure has been activated, transmitting a measurement initiation signal to a base station apparatus, the measurement initiation signal causing the target mobile terminal apparatus to initiate measurement in radio quality measurement and investigation of a network, the base station apparatus transmitting the measurement initiation signal to the target mobile terminal apparatus to cause the target mobile terminal apparatus to measure and report the desired radio quality based on a measurement and report method of the desired radio quality, and the target mobile terminal apparatus performing the measurement in the radio quality measurement and investigation of the network in accordance with the measurement initiation signal.

For explanatory convenience, some specific numerical values are used to facilitate better understanding of the present invention. Unless specifically indicated, however, these numerical values are simply illustrative, and any other suitable values may be used.

The present invention has been described with reference to the specific embodiments, but the embodiments are simply illustrative, and variations, modifications, alterations and substitutions could be appreciated by those skilled in the art. For explanatory convenience, apparatuses according to the embodiments of the present invention have been described with reference to functional block diagrams, but these apparatuses may be implemented in hardware, software or combinations thereof. The present invention is not limited to the above embodiments, and variations, modifications, alterations and substitutions can be made by those skilled in the art without deviating from the spirit of the present invention.

This international patent application is based on Japanese Priority Application No. 2010-105995 filed on April 30, 2010, the entire contents of which are hereby incorporated by reference.

### LIST OF REFERENCE SYMBOLS

100: mobile terminal apparatus (user equipment)
102: input unit
104: output unit
106: communication control unit
108: radio frequency unit
110: memory unit
112: CPU (Central Processing Unit)
1122: MDT measurement configuration setup determination unit
1124: MDT measurement configuration setting unit
1126: MDT measurement control unit
1128: MDT measurement result report information generation unit
114: positional information acquisition unit
200: base station apparatus
202: communication unit
204: CPU
2042: MDT measurement configuration indication unit
206: memory unit
300: switching station apparatus
302: communication unit
304: CPU
3042: MDT policy indication unit
3044: MDT measurement initiation control unit
3046: MDT measurement initiation signal generation unit
306: memory unit
400: positional information pertaining node
500: OAM (Operation and Maintenance) node

## Claims

1. A mobile terminal apparatus for acquiring positional information, comprising:
a determination unit configured to determine in acquisition of the positional information whether a measurement condition for measurement of radio quality measurement and investigation of a network is set to the mobile terminal apparatus;
a measurement control unit configured to, if the determination unit determines that the measurement condition is set, control to perform the measurement of the radio quality measurement and investigation of the network;
a report information generation unit configured to generate report information including a measurement result of the radio quality measurement and investigation of the network and the positional information; and
a transmitting unit configured to transmit the report information generated by the report information generation unit to the network.

2. The mobile terminal apparatus as claimed in claim 1, further comprising:
a memory unit configured to store the report information generated by the report information generation unit,
wherein the transmitting unit transmits the report information stored in the memory unit to the network.

3. A base station apparatus for use in a mobile communication method for causing a target mobile terminal apparatus to measure and report desired radio quality, comprising:
an activation signal reception unit configured to receive an activation signal to be transmitted by a positional information pertaining node for providing a positional information service, the activation signal indicating that a positioning procedure has been activated;
a measurement initiation signal reception unit configured to receive a signal from a switching station apparatus to cause measurement of radio quality measurement and investigation of a network to be initiated; and
a transmitting unit configured to, if the activation signal reception unit receives the activation signal and if the measurement initiation signal reception unit receives the signal to cause the measurement to be initiated, transmit a signal to indicate the target mobile terminal apparatus to measure and report the desired radio quality based on a measurement and report method of the desired radio quality.

4. The base station apparatus as claimed in claim 3, further comprising:
a positional information acquisition unit configured to acquire positional information to be transmitted by the positional information pertaining node;
a measurement result acquisition unit configured to acquire a measurement result of the radio quality measurement and investigation of the network to be transmitted by the mobile terminal apparatus;
a report information generation unit configured to generate report information including positional information acquired by the positional information acquisition unit and a measurement result to be transmitted by the mobile terminal apparatus, the measurement result corresponding to the positional information among measurement results acquired by the measurement result acquisition unit; and
a report information transmitting unit configured to transmit the report information generated by the report information generation unit to an upper node.

5. A switching station apparatus for use in a mobile communication method for causing a target mobile terminal apparatus to measure and report desired radio quality, comprising:
an activation detection unit configured to detect that a positioning procedure has been activated; and
a measurement initiation signal transmitting unit configured to, if the activation detection unit detects that the positioning procedure has been activated, transmit a measurement initiation signal to a base station apparatus, the measurement initiation signal causing the target mobile terminal apparatus to initiate measurement of radio quality measurement and investigation of a network,
wherein the base station apparatus transmits the measurement initiation signal to the target mobile terminal apparatus to cause the target mobile terminal apparatus to measure and report the desired radio quality based on a measurement and report method of the desired radio quality, and the target mobile terminal apparatus performs the measurement of the radio quality measurement and investigation of the network in accordance with the measurement initiation signal.

6. The switching station apparatus as claimed in claim 5, further comprising:
a memory unit configured to store a radio quality measurement and investigation policy of the network; and
an indication unit configured to transmit the radio quality measurement and investigation policy of the network stored in the memory unit to the target mobile terminal apparatus via the base station apparatus,
wherein the base station apparatus converts the radio quality measurement and investigation policy of the network into a measurement condition for measurement of the radio quality measurement and investigation of the network and transmits the measurement condition to the target mobile terminal apparatus.

7. A mobile communication method in a mobile terminal apparatus for acquiring positional information, comprising the steps of:
determining in acquisition of the positional information whether a measurement condition for measurement of radio quality measurement and investigation of a network is set to the mobile terminal apparatus;
if the step of determining determines that the measurement condition is set, controlling to perform the measurement in the radio quality measurement and investigation of the network;
generating report information including a measurement result of the radio quality measurement and investigation of the network and the positional information; and
transmitting the report information generated by the step of generating to the network.

8. A mobile communication method for causing a target mobile terminal apparatus to measure and report desired radio quality, comprising steps of:
a base station apparatus receiving an activation signal to be transmitted by a positional information pertaining node for providing a positional information service, the activation signal indicating that a positioning procedure has been activated;
the base station apparatus receiving a measurement initiation signal for measurement of radio quality measurement and investigation of a network from a switching station apparatus; and
the base station apparatus, if the activation signal is received at the step of receiving the activation signal and if the measurement initiation signal is received at the step of receiving the measurement initiation signal, transmitting a signal to indicate the target mobile terminal apparatus to measure and report the desired radio quality based on a measurement and report method of the desired radio quality.

9. A mobile communication method for causing a target mobile terminal apparatus to measure and report desired radio quality, comprising the steps of:
a switching station apparatus detecting that a positioning procedure has been activated;
the switching station apparatus, if it is detected at the step of detecting that the positioning procedure has been activated, transmitting a measurement initiation signal to a base station apparatus, the measurement initiation signal causing the target mobile terminal apparatus to initiate measurement of radio quality measurement and investigation of a network;
the base station apparatus transmitting the measurement initiation signal to the target mobile terminal apparatus to cause the target mobile terminal apparatus to measure and report the desired radio quality based on a measurement and report method of the desired radio quality; and
the target mobile terminal apparatus performing the measurement of the radio quality measurement and investigation of the network in accordance with the measurement initiation signal.
